# EUROPEAN PATENT APPLICATION

(11) **EP 2 713 664 A1**
(43) Date of publication of application: **02.04.2014**
(21) Application number: 12360071.0
(22) Date of filing: 28.09.2012
(51) Int. Cl.: H04W 60/00

(54) **Network attachment**

(71) Applicant: Alcatel Lucent, 75007 Paris (FR)
(72) Inventor: Casati, Alessio, West Molesey, Surrey KT8 1NT (GB)
(74) Representative: Leppard, Andrew John

(57) **Abstract**

An evolved packet data system user equipment method, user equipment, a network node method, a network node and computer program products are disclosed. The evolved packet data system user equipment method of attaching to a network node of a wireless telecommunications network comprises: determining that the user equipment requires to remain attached to the network node even without a packet data network connection between the user equipment and the network; and transmitting an evolved packet data system attach request message to the network node, the evolved packet data system attach request message encoding an indication that the user equipment requires to remain attached to the network node even without a packet data network connection. Avoiding the need for evolved packet system attached devices to remain attached without a packet data network connection significantly frees up resources, particularly in network gateways. It will be appreciated that machine devices (such as smart meters or other attachable user equipment) may consume significant resources in gateways even though they may only require a packet data network connection very infrequently.

## Description

### SUMMARY OF THE INVENTION

The present invention relates to an evolved packet data system user equipment method, user equipment, a network node method, a network node and computer program products.

### BACKGROUND

Wireless telecommunications networks are known. In such networks, user equipment (for example mobile telephones) are operable to communicate with network nodes (for example base stations) provided by network providers.

In known wireless telecommunications networks, radio coverage is provided to network connectable devices within areas known as cells. A base station is located in each cell to provide radio coverage. Typically, user equipment in each cell are operable to receive information and data from a base station and transmit information and data to a base station.

User equipment roam through a wireless communication network. Base stations are typically provided which support areas of radio coverage. A number of such base stations are provided which are distributed geographically in order to provide a wide area of coverage to user equipment.

When user equipment is within an area served by a base station, communications may be established between the user equipment and the base station over associated radio links. Each base station typically supports a number of sectors within the geographical area of service.

Service provided to user equipment is overseen by a mobility management entity (MME). The MME communicates with user equipment, serving gateways and base stations and determines which base station each user equipment is served by. Furthermore, the MME acts to control and communicate with serving gateways, base stations and user equipment when user equipment moves from one geographical area served by one base station to a geographical area served by another base station.

For an evolved packet data system, a packet data network connection is provided when the user equipment attaches to the network to enable data packets to be transmitted between the user equipment and the network.

Although this approach enables data to be communicated between the user equipment and the network, unexpected consequences can occur. Accordingly, it is desired to provide an improved technique for attaching to a network.

### SUMMARY

According to a first aspect, there is provided an evolved packet data system user equipment method of attaching to a network node of a wireless telecommunications network, the method comprising: determining that the user equipment requires to remain attached to the network node even without a packet data network connection between the user equipment and the network; and transmitting an evolved packet data system attach request message to the network node, the evolved packet data system attach request message encoding an indication that the user equipment requires to remain attached to the network node even without a packet data network connection.

The first aspect recognises that a problem with existing specifications for an evolved packet system attached device is that it is assumed that a default packet data network connected is always established when the user equipment attaches to the network and that when a user equipment has no packet data network connection, it is automatically detached from the network. This is because the existing specifications assume that user equipment is expected to always be reachable over at least one packet data network connection. However, the first aspect recognises that it may be advantageous for an evolved packet system attached device to remain attached to the network without a packet data network connection. For example, a packet data network connection may not be required because it may be possible to transmit data between the user equipment and the network in other ways (for example, using the circuit switched network or through the Short Message Service (SMS) or other messaging). Avoiding the need for evolved packet system attached devices to remain attached without a packet data network connection significantly frees up resources, particularly in network gateways. It will be appreciated that machine devices (such as smart meters or other attachable user equipment) may consume significant resources in gateways even though they may only require a packet data network connection very infrequently.

Accordingly, a method of attaching an evolved packet data system user equipment to a network node a wireless telecommunications network is provided. The method may comprise the step of determining whether the user equipment desires to remain attached to the network even when no packet data network connection exists between the user equipment and the network. The method may also comprise the step of transmitting, when the user equipment desires to remain attached to the network node when no data packet network connection exists, an evolved packet data system attach request message to the network node. The evolved packet data system attach request message may encode an indication that the user equipment desires to remain attached to the network node even when no packet data network connection exists. In this way, the user equipment is able to indicate to compatible network nodes that it does not require to be constantly provided with a packet data network connection for the period whilst it is connected or attached to the network node. This enables compatible network nodes to not provide the user equipment with a packet data network connection to those user equipment that indicate that no such connection is required. This helps to significantly free up resources within the network node.

In one embodiment, the method comprises the step of: on receipt of an evolved packet data system attach accept message from the network node encoding an indication that the user equipment may remain attached to the network node even without a packet data network connection, terminating an evolved packet data system attach procedure without establishing a packet data network connection. Accordingly, when the user equipment receives an attach accept message indicating that it may remain attached to the network node even without a data packet network connection, any evolved packet data network connection activation procedure may be delayed until required by the user equipment. Again, this helps to prevent a data packet network connection being established when none is required.

In one embodiment, the comprises the step of: determining that no packet data network connection is currently required by the user equipment; and wherein the evolved packet data system attach request message encodes an indication that no packet data network connection is currently required by the user equipment. Accordingly, the user equipment may determine that not only is the user equipment capable of foregoing a data packet network connection and still remaining connected to the network but also that no data packet connection is currently required by the user equipment. The evolved packet data system attach request message may also indicate that no such connection is currently required by the user equipment.

In one embodiment, the method comprises the step of: on receipt of the evolved packet data system attach accept encoding an indication confirming that no packet data network connection is currently required, terminating an evolved packet data system attach procedure without establishing, for example a default, packet data network connection. Accordingly, when the network confirms that no packet data network connection is currently required, the evolved packet data system attach procedure may be completed while preventing an unnecessary data packet network connection being established.

In one embodiment, the method comprises the step of: when it is determined that at least one packet data network connection is required between the user equipment and the network node, initiating an evolved packet data system attach procedure to establish the at least one, for example default, packet data network connection between the user equipment and the network node. Even for those user equipment which do not necessarily require a data packet network connection to be automatically established, the user equipment may still subsequently indicate to the network node that a packet data network connection is now required to initiate an evolved packet data system attach procedure to establish one or more packet data network connections with a network.

In one embodiment, the method comprises the step of: determining that a packet data network connection is currently required by the user equipment; and wherein the evolved packet data system attach request message encodes an indication that the, for example default, packet data network connection is currently required by the user equipment.

In one embodiment, the method comprises the step of: following receipt of the attach accept message from the network node encoding the indication that the user equipment may remain attached to the network node even without a packet data network connection, remaining attached to the network node following termination of all packet data network connections between the user equipment and the network node. Accordingly, when the network confirms using the attached accept message that the user equipment may remain attached to the network even without a packet data network connection, the user equipment will remain attached to the network node even when/or of the packet data network connections have been released. Again, this enables the user equipment to use packet data network connections for the period that they are required but allows these to be released once the need for the packet data network connections has passed, whilst still enabling the user equipment to remain attached to the network.

In one embodiment, the method comprises the step of: on receipt of an evolved packet data system attach accept message from the network node encoding an indication that the user equipment may not remain attached to the network node without a packet data network connection, continuing with an evolved packet data system attach procedure to establish a packet data network connection implying the user equipment shall not remove the last packet data network connection if it needs to remain attached to the system. Accordingly, the network may indicate that the user equipment may not remain attached to the network without a packet data network connection. This may indicate to the user equipment that although the network is able to support user equipment attached without a packet data network connection, this particular user equipment is not permitted to do so. Indicating this to the user equipment using the packet data system attached accept message may indicate that the user equipment should not attempt to relocate to another network node to attempt to see whether that other network node will accept the user equipment being attached without a packet data network connection. Furthermore, the user equipment can infer that it should not remove its last packet data network connection if it to remain attached to the network.

According to a second aspect, there is provided an evolved packet data system user equipment operable to attach to a network node of a wireless telecommunications network, the user equipment comprising: determination logic operable to determine that the user equipment requires to remain attached to the network node even without a packet data network connection between the user equipment and the network; and transmission logic operable to transmit an evolved packet data system attach request message to the network node, the evolved packet data system attach request message encoding an indication that the user equipment requires to remain attached to the network node even without a packet data network connection.

In one embodiment, the user equipment comprises: reception logic operable, on receipt of an evolved packet data system attach accept message from the network node encoding an indication that the user equipment may remain attached to the network node even without a packet data network connection, to terminate an evolved packet data system establishment attach procedure without establishing a packet data network connection.

In one embodiment, the determination logic is operable to determine that no packet data network connection is currently required by the user equipment and the evolved packet data system attach request message encodes an indication that no packet data network connection is currently required by the user equipment.

In one embodiment, the reception logic is operable, on receipt of the evolved packet data system attach accept encoding an indication confirming that no packet data network connection is currently required, to terminate an evolved packet data system attach procedure without establishing a, for example default, packet data network connection.

In one embodiment, the determination logic is operable, when it is determined that at least one packet data network connection is required between the user equipment and the network node, to initiate an evolved packet data system attach procedure to establish the at least one, for example default, packet data network connection between the user equipment and the network node.

In one embodiment, the determination logic is operable to determine that a packet data network connection is currently required by the user equipment and the evolved packet data system attach request message encodes an indication that the, for example default, packet data network connection is currently required by the user equipment.

In one embodiment, the reception logic is operable, following receipt of the attach accept message from the network node encoding the indication that the user equipment may remain attached to the network node even without a packet data network connection, to remain attached to the network node following termination of all packet data network connections between the user equipment and the network node.

In one embodiment, the reception logic is operable, on receipt of an evolved packet data system attach accept message from the network node encoding an indication that the user equipment may not remain attached to the network node without a packet data network connection, to continue with an evolved packet data system establishment attach procedure to establish a packet data network connection.

According to a third aspect, there is provided a network node method comprising: receiving an evolved packet data system attach request message from a user equipment, the evolved packet data system attach request message encoding an indication that the user equipment requires to remain attached to the network node even without a packet data network connection; and determining whether the user equipment may remain attached to the network node even without a packet data network connection.

In one embodiment, if it is determined that the user equipment may remain attached to the network node even without a packet data network connection, the method comprises: transmitting an evolved packet data system attach accept message to the user equipment encoding an indication that the user equipment may remain attached to the network node even without a packet data network connection; and terminating an evolved packet data system attach procedure without establishing a packet data network connection.

In one embodiment, when the evolved packet data system attach request message encodes an indication that no packet data network connection is currently required by the user equipment and if it is determined that the user equipment may remain attached to the network node even without a current packet data network connection, the method comprises: transmitting an evolved packet data system attach accept message encoding an indication confirming that no packet data network connection is currently required; and terminating an evolved packet data system attach procedure without establishing a, for example default, packet data network connection.

In one embodiment, when it is determined that at least one packet data network connection is required between the user equipment and the network node, the method comprises: initiating an evolved packet data system attach procedure to establish the at least one, for example default, packet data network connection between the user equipment and the network node.

In one embodiment, if it is determined that the user equipment may remain attached to the network node even without a packet data network connection, the method comprises: allowing the user equipment to remain attached to the network node following termination of all packet data network connections between the user equipment and the network node.

In one embodiment, if it is determined that the user equipment may not remain attached to the network node without a packet data network connection, the method comprises: transmitting an evolved packet data system attach accept message to the user equipment encoding an indication that the user equipment may not remain attached to the network node without a packet data network connection; and continuing with an evolved packet data system attach procedure to establish a packet data network connection with the user equipment.

According to a fourth aspect, there is provided a network node, comprising: reception logic operable to receive an evolved packet data system attach request message from a user equipment, the evolved packet data system attach request message encoding an indication that the user equipment requires to remain attached to the network node even without a packet data network connection; and determination logic operable to determine whether the user equipment may remain attached to the network node even without a packet data network connection.

In one embodiment, the network node comprises: transmission logic operable, when the determination logic determines that the user equipment may remain attached to the network node even without a packet data network connection, to transmit an evolved packet data system attach accept message to the user equipment encoding an indication that the user equipment may remain attached to the network node even without a packet data network connection and to terminate an evolved packet data system attach procedure without establishing a packet data network connection

In one embodiment, the transmission logic is operable, when the evolved packet data system attach request message encodes an indication that no packet data network connection is currently required by the user equipment and if it is determined that the user equipment may remain attached to the network node even without a current packet data network connection, to transmit an evolved packet data system attach accept message encoding an indication confirming that no packet data network connection is currently required and to terminate an evolved packet data system attach procedure without establishing a, for example default, packet data network connection.

In one embodiment, the transmission logic is operable, when it is determined that at least one packet data network connection is required between the user equipment and the network node, to initiate an evolved packet data system attach procedure to establish the at least one, for example default, packet data network connection between the user equipment and the network node.

In one embodiment, the transmission logic is operable, if it is determined that the user equipment may remain attached to the network node even without a packet data network connection, to allow the user equipment to remain attached to the network node following termination of all packet data network connections between the user equipment and the network node.

In one embodiment, the transmission logic is operable, if it is determined that the user equipment may not remain attached to the network node without a packet data network connection, to transmit an evolved packet data system attach accept message to the user equipment encoding an indication that the user equipment may not remain attached to the network node without a packet data network connection and to continue with an evolved packet data system attach procedure to establish a packet data network connection with the user equipment.

According to a fifth aspect, there is provided a computer program product operable, when executed on a computer, to perform the method steps of the first or the third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an arrangement where the network is operable to support user equipment which remain attached even without a packet data network connection;
Figure 2 illustrates the message flow between user equipment which requests that it may remain connected with no packet data network connection and that it does not currently require a packet data network connection;
Figure 3 illustrates the messaging between a user equipment which wishes to be able to remain attached to the network without a packet data network connection, but which also requires the immediate establishment of a current packet data network connection; and
Figure 4 illustrates the flow of messages between the user equipment and the network when the network does not support user equipment being attached with no packet data network connection.

### DESCRIPTION OF THE EMBODIMENTS

### Overview

Before discussing the embodiments in any more detail, first an overview will be provided. As mentioned above, embodiments recognise that it is useful for an evolved packet system attached device to remain attached to the network even without a packet data network connection. However, one of the basic assumptions in the design of the evolved packet system has been that a default packet data network connection is always established at attachment time and, when user equipment has no packet data network connection, it is automatically detached from the evolved packet system. This is because user equipment are expected to always be reachable over at least one packet data network connection. However, embodiments enable user equipment to indicate that it has the capability and requests the right to stay attached to the network even without a packet data network connection. This helps to free resources in the network and enables a network to know that information elements in messages which assume the mandatory presence of at least one packet data network connection may be absent from some protocol messages.

In particular, the user equipment when it attaches sends to the network an indication that it supports an evolved packet system attachment with no packet data network connection mode. This indication is provided as part of messaging that can be ignored by the network without causing an error (in order to prevent malfunction of legacy equipment or equipment which does not support this mode). Although it will be appreciated that many different techniques could be used to provide this indication, typically a flag is provided within an information element of an existing message.

The user equipment will also typically include during attachment a flag indicating to the network whether a default packet data network connection is currently required or not so that the network knows how to respond when the attach procedure is executed. For example, the network will know whether or not to allocate a packet data network connection straight away even though the packet data network connection may later be deactivated and the user equipment may remain with no packet data network connections whilst still being evolved packet system mobility management attached. If the user equipment requests the evolved packet system attachment with no packet data network connection mode and the network authorises this mode, then the signalling gateway allocation and the packet data network gateways selections are skipped as these network nodes are not required while the user equipment is evolved packet system mobility management attached with no packet data network connection mode.

When the network receives these flags in the attach request message, if the network supports this mode, it provides in the attached accept message it sends to the user equipment a positive indication to the user equipment of whether or not the network node can support the evolved packet system attachment without packet data network connection mode. It will be appreciated that legacy or network nodes that do not support this mode will respond with a standard attached accept massage from which the user equipment is able to infer that this mode is not supported. For those network nodes which do support this mode, the attach accept message may also provide an indication of whether the user equipment is authorised or not to use the evolved packet system attached with no packet data network connection mode. If the user equipment is not authorised to use this mode, despite the fact that the user equipment and the network both support this feature, it will ensure that it does not release its last active packet data network connection unless it also wishes to detach from the network. Also, if the user equipment determines that the network does not support the evolved packet system attached with no packet data network connection mode, the user equipment will again not release the last active packet data network connection until it wishes to detach from the network.

As a result, the user equipment, upon completion of the attach procedure, can therefore understand whether it is possible for it to release its last packet data network connection without it being automatically detached and therefore operate in the evolved packet system attached with no packet data network connection mode. In addition, the user equipment can also understand whether it is possible for it to not establish a packet data network connection when attaching to the network.

This approach significantly frees up resources within the network, particularly when large numbers of user equipment which only infrequently require a packet data network connection to be established are provided.

### Example 1 - User equipment and network both support evolved packet system with no packet data network connection - UE authorised to have no packet data network connection

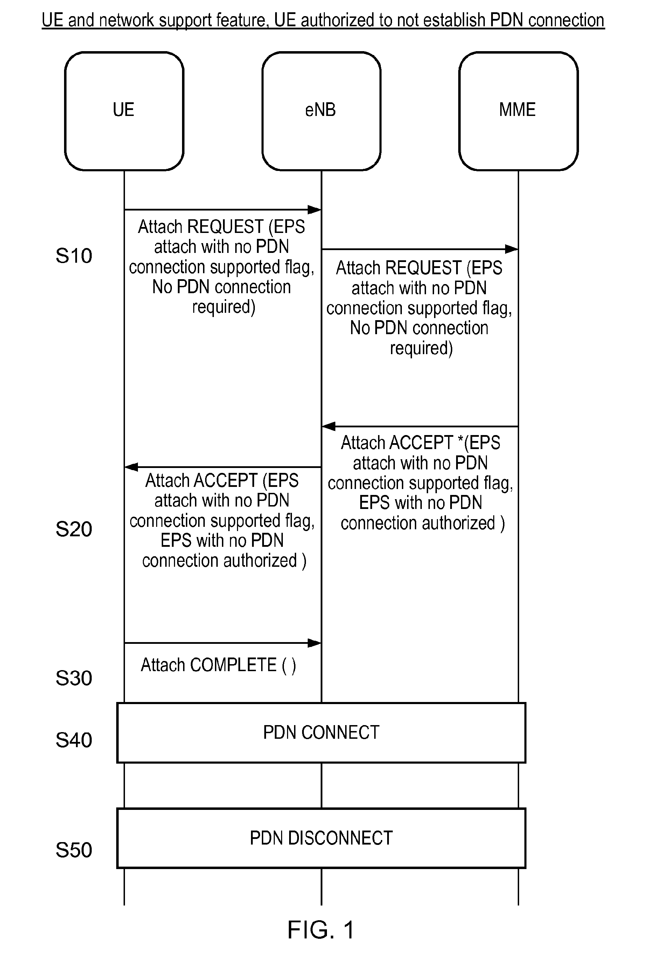

Figure 1 illustrates an arrangement where the network is operable to support user equipment which remain attached even without a packet data network connection.

At step S10, the user equipment wishes to attach to the network with no packet data network connection. Accordingly, the user equipment sends an attach request message to the network which includes (in addition to other information elements not shown or described for simplicity and to aid understanding) a flag indicating that the user equipment supports an evolved packet system with no packet data network connection mode. In addition, the attach request message includes a flag indicating that the user equipment does not need immediate establishment of a default packet data network connection. This message is transferred to the mobility management entity via the receiving base station.

The mobility management entity then determines whether the network supports evolved packet system attachment with no packet data network connection. Optionally, the mobility management entity may also determine whether that particular user equipment is authorised to perform evolved packet system attachment with no packet data network connection. In this example, the mobility management entity determines that network supports the evolve packet system attachment with no packet data network connection mode and that the user equipment is authorised for this.

Accordingly, at step S20, the network skips all the steps described in the conventional attach proocedure set out in TS 23.401 and instead sends an attach accept message which includes an indication to the user equipment that the networks supports evolve packet system with no packet data network connection mode. The attach accept message also includes an indication that the user equipment is authorised to have no packet data network connection. Again, this message is transferred from the mobility management entity to the user equipment via the base station.

At step S30, the user equipment skips all the steps described in the conventional attach proocedure set out in TS 23.401 and transmits an attach complete message to the base station.

Thereafter, whenever the user equipment needs to establish a packet data network connection, it does so in accordance with 3GPP TS 23-401 as shown at step S40.

Likewise, whenever the user equipment wishes to disconnect a packet data network connection, it does so in accordance with 3GPP TS 23.401 as shown at step S50. It will be appreciated that in this example, the user equipment may still remain connected even when all of the packet data network connections have been disconnected.

### Example 2 - User equipment and network both support evolved packet system with no packet data network connection - UE not authorised to have no packet data network connection

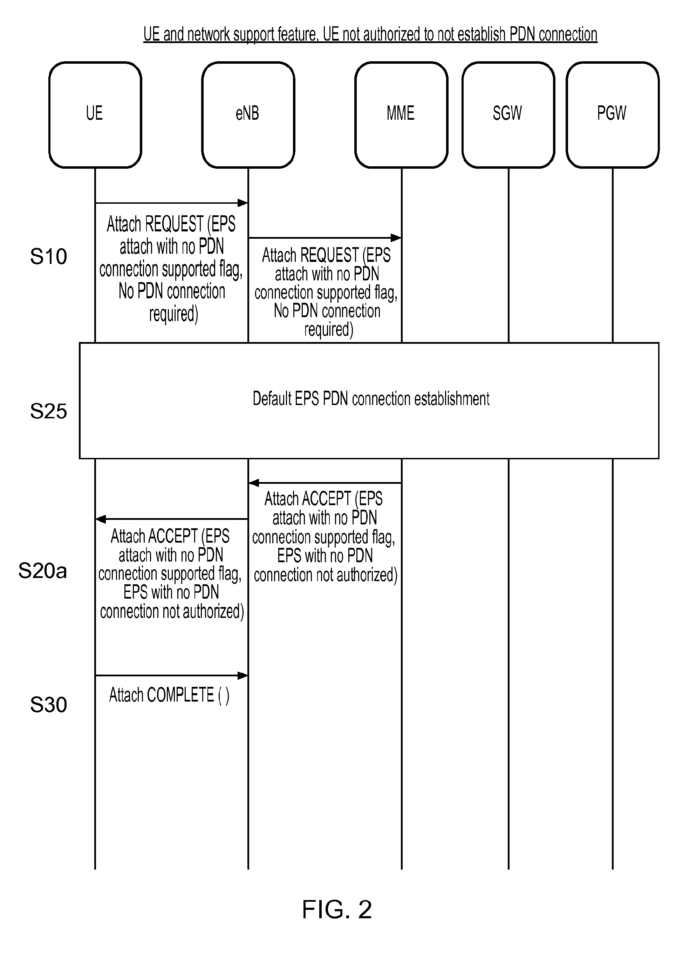

Figure 2 illustrates the message flow between user equipment which requests that it may remain connected with no packet data network connection and that it does not currently require a packet data network connection.

Accordingly, an attach request message is sent at step S10, as described above.

However, although the network supports the evolve packet system attach with no packet data network connection mode, this user equipment is not authorised to have no packet data network connection. Accordingly, at step S25, a default packet data network connection establishment routine occurs, as specified in 3GPP TS 23.401.

At step S30a, the mobility management entity transmits a message via the base station to the user equipment which indicates that the evolved packet system attach with no data network connection mode is supported by the network but that the user equipment is not authorised to have no packet data network connection.

The user equipment then transmits an attach complete message at step S30, as mentioned above.

Accordingly, the user equipment in this example will be aware that although the network is able to support the evolve packet system attach with no packet data network connection mode, this user equipment must retain a packet data network connection in order to remain attached to the network. Accordingly, the user equipment will only disconnect its last packet data network connection when it wishes to disconnect from the network. Also, the user equipment may be configured in these circumstances not to try to reconnect to another base station in order to try to see whether it can remain attached to that base station with no packet data network connection. The network may make the determination that the user equipment is not permitted to remain attached without a packet data network connection, based on, for example, a subscription status of that user equipment.

### Example 3 - User equipment and network both support evolved packet system with no packet data network connection - UE requires packet data connection

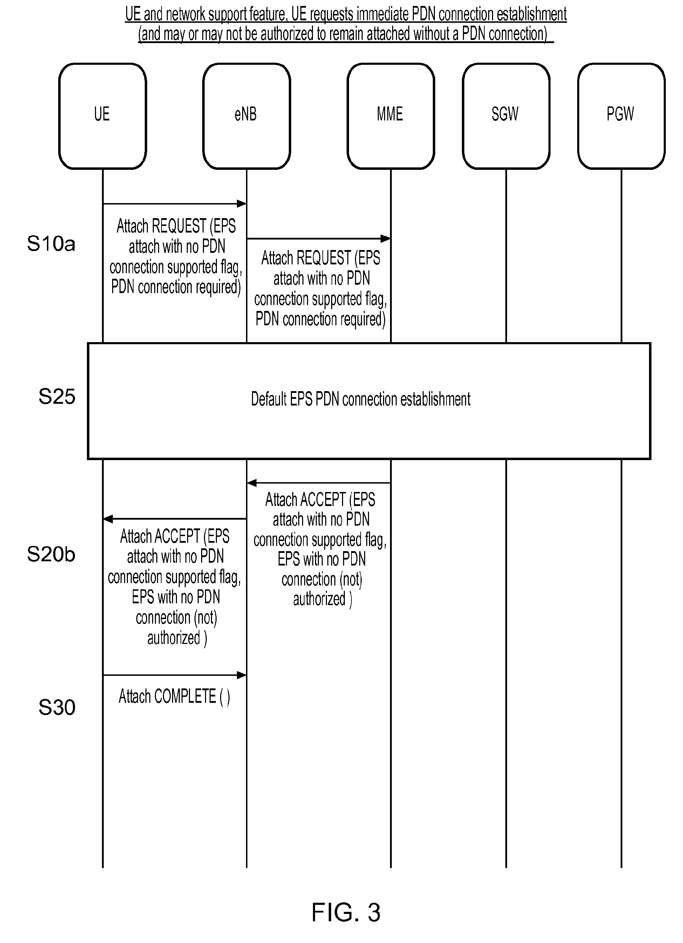

Figure 3 illustrates the messaging between a user equipment which wishes to be able to remain attached to the network without a packet data network connection, but which also requires the immediate establishment of a current packet data network connection.

Accordingly, at step S10a, the user equipment transmits an attach request message to the base station. The attach request message indicates that the user equipment wishes to be able to remain attached to the network without a packet data network connection. However, in this case, the message also indicates to the network that the user equipment wishes to establish packet data network connection.

Accordingly, at step S25, a default packet data network connection establishment procedure occurs, as mentioned above.

At step S20b, the network indicates to the user equipment in an attach accept message that the network supports user equipment being attached without a packet data network connection. The message also indicates whether or not the user equipment is permitted to remain attached to the network without such a packet data network connection.

At step S30, the user equipment transmits an attach complete message, as mentioned above.

### Example 4 - Network does not support evolved packet system with no packet data network connection

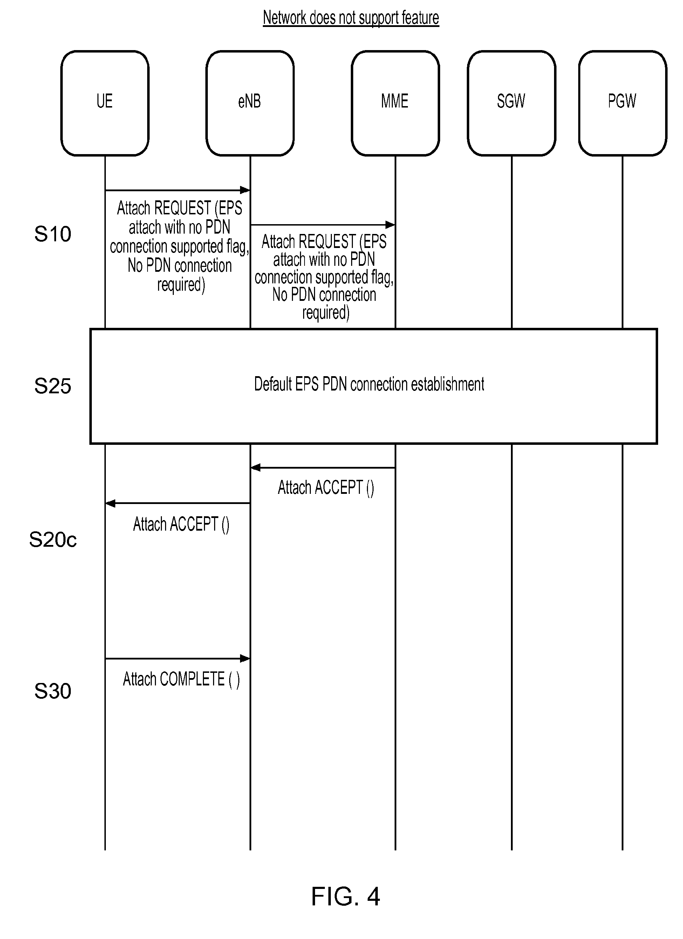

Figure 4 illustrates the flow of messages between the user equipment and the network when the network does not support user equipment being attached with no packet data network connection.

At step S10, the user equipment transmits an attach request message, as mentioned above.

However, in this example, the network does not support user equipment remaining attached with no packet data network connection and so at step S25, a packet data network connection procedure is performed.

At step S20c, the network responds with a conventional attach accept message. Receipt of the conventional attach accept message indicates to the user equipment that the network is unable to support user equipment being attached without a packet data network connection and so will only disconnect its last packet data network connection when it wishes to detach from the network.

At step S30, the user equipment transmits an attach complete message, as mentioned above. Accordingly, it can be seen that when the network does not support user equipment remaining attached without packet data network connection, it ignores the flags in the attach request and the attach procedure proceeds normally. The user equipment can then behave normally and will have to keep an active packet data network connection as long as it remains attached.

Although in each of these embodiments, the base station is shown transferring messages between the user equipment and the mobility management entity which makes the assessment on behalf of the network, it will be appreciated that this functionality may instead be provided within the base station.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. An evolved packet data system user equipment method of attaching to a network node of a wireless telecommunications network, said method comprising:
determining that said user equipment requires to remain attached to said network node even without a packet data network connection between said user equipment and said network; and
transmitting an evolved packet data system attach request message to said network node, said evolved packet data system attach request message encoding an indication that said user equipment requires to remain attached to said network node even without a packet data network connection.

2. The method of claim 1, comprising the step of:
on receipt of an evolved packet data system attach accept message from said network node encoding an indication that said user equipment may remain attached to said network node even without a packet data network connection, terminating an evolved packet data system attach procedure without establishing a packet data network connection.

3. The method of claim 1 or 2, comprising the step of:
determining that no packet data network connection is currently required by said user equipment; and wherein said evolved packet data system attach request message encodes an indication that no packet data network connection is currently required by said user equipment.

4. The method of claim 3, comprising the step of:
on receipt of said evolved packet data system attach accept encoding an indication confirming that no packet data network connection is currently required, terminating an evolved packet data system attach procedure without establishing a packet data network connection.

5. The method of any preceding claim, comprising the step of:
when it is determined that at least one packet data network connection is required between said user equipment and said network node, initiating an evolved packet data system attach procedure to establish said at least one packet data network connection between said user equipment and said network node.

6. The method of any preceding claim, comprising the step of:
determining that a packet data network connection is currently required by said user equipment; and wherein said evolved packet data system attach request message encodes an indication that said packet data network connection is currently required by said user equipment.

7. The method of any preceding claim, comprising the step of:
following receipt of said attach accept message from said network node encoding said indication that said user equipment may remain attached to said network node even without a packet data network connection, remaining attached to said network node following termination of all packet data network connections between said user equipment and said network node.

8. The method of any preceding claim, comprising the step of:
on receipt of an evolved packet data system attach accept message from said network node encoding an indication that said user equipment may not remain attached to said network node without a packet data network connection, continuing with an evolved packet data system attach procedure to establish a packet data network connection implying the user equipment shall not remove the last packet data network connection if it needs to remain attached to the system.

9. An evolved packet data system user equipment operable to attach to a network node of a wireless telecommunications network, said user equipment comprising:
determination logic operable to determine that said user equipment requires to remain attached to said network node even without a packet data network connection between said user equipment and said network; and
transmission logic operable to transmit an evolved packet data system attach request message to said network node, said evolved packet data system attach request message encoding an indication that said user equipment requires to remain attached to said network node even without a packet data network connection.

10. A network node method comprising:
receiving an evolved packet data system attach request message from a user equipment, said evolved packet data system attach request message encoding an indication that said user equipment requires to remain attached to said network node even without a packet data network connection; and
determining whether said user equipment may remain attached to said network node even without a packet data network connection.

11. The method of claim 10 wherein, if it is determined that said user equipment may remain attached to said network node even without a packet data network connection, said method comprises:
transmitting an evolved packet data system attach accept message to said user equipment encoding an indication that said user equipment may remain attached to said network node even without a packet data network connection; and
terminating an evolved packet data system attach procedure without establishing a packet data network connection.

12. The method of claim 10 or 11 wherein, when said evolved packet data system attach request message encodes an indication that no packet data network connection is currently required by said user equipment and if it is determined that said user equipment may remain attached to said network node even without a current packet data network connection, said method comprises:
transmitting an evolved packet data system attach accept message encoding an indication confirming that no packet data network connection is currently required; and
terminating an evolved packet data system attach procedure without establishing a packet data network connection.

13. The method of any one of claims 10 to 12 wherein, when it is determined that at least one packet data network connection is required between said user equipment and said network node, said method comprises:
initiating an evolved packet data system attach procedure to establish said at least one packet data network connection between said user equipment and said network node.

14. A network node, comprising:
reception logic operable to receive an evolved packet data system attach request message from a user equipment, said evolved packet data system attach request message encoding an indication that said user equipment requires to remain attached to said network node even without a packet data network connection; and
determination logic operable to determine whether said user equipment may remain attached to said network node even without a packet data network connection.

15. A computer program product operable, when executed on a computer, to perform the method steps of any one of claims 1 to 8 or 10 to 13.
